**Europäisches Patentamt**

**European Patent Office**

**Office européen des brevets**

(19)

(11) Veröffentlichungsnummer: **0 309 678**
**B1**

# (12) EUROPÄISCHE PATENTSCHRIFT

(45) Veröffentlichungstag der Patentschrift:
31.10.90

(51) Int. Cl.⁵: **F16K 5/10**, F16K 47/04

(21) Anmeldenummer: 88112190.9

(22) Anmeldetag: 28.07.88

(54) **Verfahren zum Fertigen eines Kugelkükens für einen Kugelhahn.**

(30) Priorität: 02.09.87 DE 3729255

(43) Veröffentlichungstag der Anmeldung:
05.04.89 Patentblatt 89/14

(45) Bekanntmachung des Hinweises auf die Patenterteilung:
31.10.90 Patentblatt 90/44

(84) Benannte Vertragsstaaten:
BE CH DE FR GB IT LI NL

(56) Entgegenhaltungen:
DE-A- 1 650 419
DE-A- 2 654 769
US-A- 1 534 866
US-A- 2 018 034

Patent Abstracts of Japan, unexamined applications,
Field M, Band 7, Nr. 261, 19. November 1983, The Patent
Office Japanese Government, Seite 67 M 257,
Kokai-Nr. 58-142 080 (Yoshio Kajita)

(73) Patentinhaber: **Deutsche Babcock Werke
Aktiengesellschaft, Duisburger Strasse 375,
D-4200 Oberhausen 1(DE)**

(72) Erfinder: **Gikadi, Teofani, Dr., Billrothstrasse 28,
D-4300 Essen 1(DE)**

(74) Vertreter: **Müller, Jürgen, Dipl.-Ing., Deutsche Babcock
AG Lizenz- und Patentabteilung Duisburger Strasse 375,
D-4200 Oberhausen 1(DE)**

## Beschreibung

Die Erfindung betrifft ein Verfahren zum Fertigen eines Kugelkükens für einen Kugelhahn mit den Merkmalen des Oberbegriffes des Patentanspruchs.

Bei einem bekannten Kugelhahn (US-A 2 018 034, DE-B 2 732 672 oder US-A 1 534 866) ist in die Durchgangsbohrung des Kugelkükens ein hülsenförmiges Steuerelement eingefügt. Dieses Steuerelement ist an einem Ende offen, während in dem anderen Ende die Drosselöffnung gebildet ist. Das mit der Drosselöffnung versehene Steuerelement kann auch scheibenförmig ausgebildet und in das Gehäuse eingesetzt sein. In diesem Fall enthält das Kugelküken eine durchgehende Durchgangsbohrung von gleichbleibendem Innendurchmesser. Die Drosselöffnungen in den Steuerelementen weisen unterschiedliche Steuercharakteristiken auf. Zur Umstellung auf eine andere Steuercharakteristik müssen daher die Steuerelemente ausgetauscht werden, so daß je nach Anwendungszweck unterschiedliche Steuerelemente gefertigt und gelagert werden müssen.

Es sind weiterhin Kugelhähne mit aus Keramik bestehenden Kugelküken bekannt, bei denen zur Regelung des Massenstromes das Kugelküken mit einer der Regelcharakteristik entsprechenden Öffnung versehen ist. Diese ist im gesamten Durchmesser gleichbleibend, so daß eine Veränderung der Regelcharakteristik nur durch Auswechseln des Kugelkükens durchführbar ist. Damit wird für die unterschiedlichen Anwendungsgebiete, wie reine Absperrung, Regelung mit linerarer oder gleichprozentiger Kennlinie, die Fertigung und Lagerung von unterschiedlichen Kugelküken mit entsprechenden Öffnungen notwendig, da diese Öffnungen nur im Herstellungsprozeß des Kugelkükens angebracht werden können und eine nachträgliche Bearbeitung nicht möglich ist.

Der Erfindung liegt die Aufgabe zugrunde, einen Kugelhahn zu entwickeln, der ohne Veränderung der Zahl der wesentlichen Konstruktionsbauteile für alle Anwendungsgebiete der Regelung und Absperrung einsetzbar ist.

Diese Aufgabe wird durch ein Verfahren mit den Merkmalen des Anspruches gelöst.

Durch das erfindungsgemäße Verfahren wird in einem ersten Verfahrensschritt ein Zwischenprodukt geschaffen, das für alle Anwendungsfälle einsetzbar ist. Die Anpassung an den speziellen Anwendungsfall erfolgt durch eine geringe Bearbeitung in dem zweiten Verfahrensschritt. Damit ist für eine vorgegebene Ventilgröße nur ein Konstruktionsbauteil erforderlich, um alle Anwendungsfälle abzudecken. Das Verfahren bezieht sich insbesondere auf die Herstellung von Kugelküken aus einem keramischen Werkstoff wie Aluminiumoxid oder Siliziumkarbid oder -nitrid. Das Kugelküken kann auch aus einem metallischen Gußwerkstoff, z.B. Sphäroguß, gefertigt sein.

Mehrere Ausführungsbeispiele der Erfindung sind in der Zeichnung dargestellt und werden im folgenden näher erläutert. Es zeigen

Fig. 1 den Längsschnitt durch einen Kugelhahn,
Fig. 2 den Längsschnitt durch ein Kugelküken mit einem geschlossenen Boden,
Fig. 3 die Seitenansicht zu Fig. 2,
Fig. 4 den Längsschnitt durch ein Kugelküken mit einer Drosselöffnung und
Fig. 5 die Seitenansicht zu Fig. 4.

Der Kugelhahn besteht aus einem metallischen Gehäuse 1 und einem metallischen Gehäuseflansch 2, die als nicht drucktragende Teile ausgebildet und durch einen Spannring 3 zusammengehalten sind. An das Gehäuse 1 und den Gehäuseflansch 2 sind nicht dargestellte Rohrstutzen angeschraubt.

Innerhalb des Gehäuses 1 ist ein mit einer Durchgangsbohrung 4 versehenes Kugelküken 5 drehbar angeordnet. Das Kugelküken 5 dichtet an den Sitzflächen zweier ringförmiger Sitzgehäuse 6 ab, die von dem Gehäuse 1 und dem Gehäuseflansch 2 umschlossen sind. Das Kugelküken 5 ist von einem Gehäusemittelstück 7 umgeben, das auf jeweils einer Schulter der Sitzgehäuse 6 ruht. Das Gehäusemittelstück 7 und die Sitzgehäuse 6 bestehen ebenso wie das Kugelküken 5 aus Keramik. Sie haben eine zylindrische Form und sind somit keramikgerecht konzipiert. Die Sitzgehäuse 6 sind gegenüber dem Gehäusemittelstück 7 und gegenüber dem Gehäuse 1 und dem Gehäuseflansch 2 durch O-Ringe 8, 9 abgedichtet. Die metallischen Teile des Kugelhahnes kommen somit mit dem durchströmenden Medium nicht in Berührung.

Das Gehäusemittelstück 7 ist mit einer Bohrung versehen, durch die eine Spindel 10 hindurchgeführt ist. Die Spindel 10 greift in eine Nut 11 des Kugelkükens 5 ein und ist in dem Gehäuse 1 mit Hilfe von zwei Ringen 12, 13 gehalten. Der Durchtritt der Spindel 10 durch das Gehäusemittelstück 7 ist durch Dichtmanschetten 14 abgedichtet, die über eine Stopfbuchsbrille 15 mit Hilfe von Schrauben 16 angedrückt werden. Das aus dem Gehäuse 1 herausragende Ende der Spindel 10 ist über eine Anschlußspindel 17 mit einem Handhebel 18 verbunden.

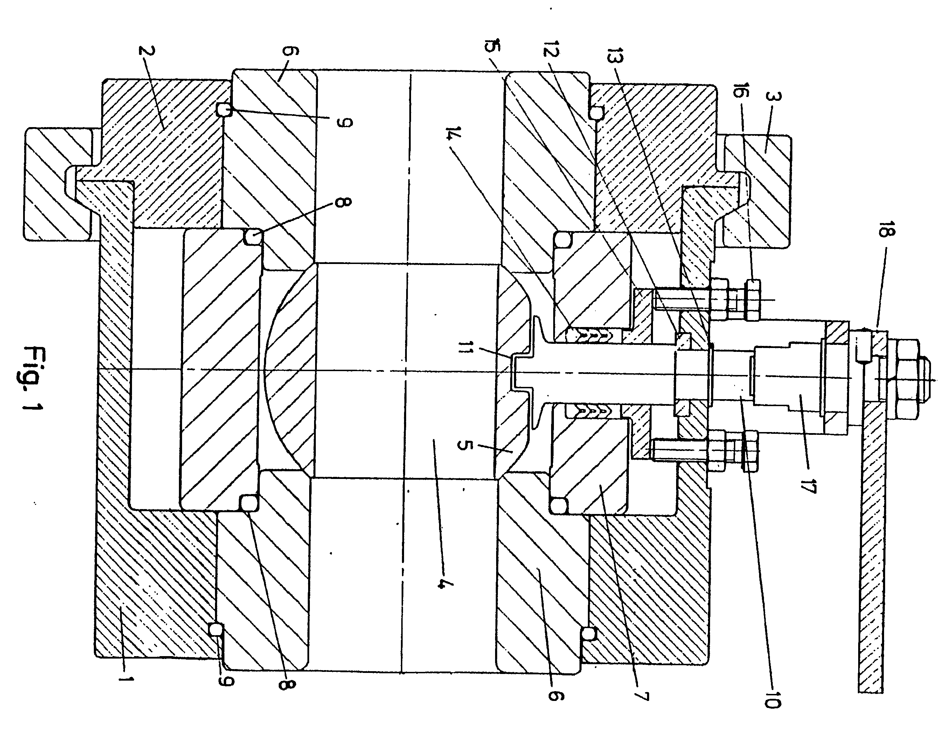

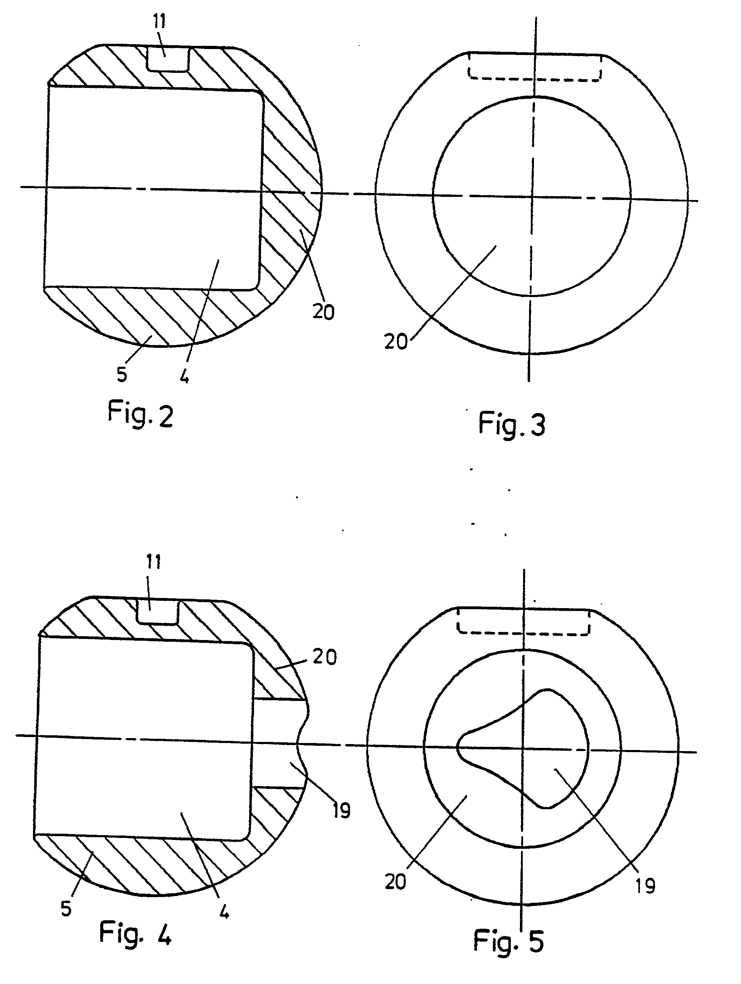

Der Kugelhahn kann, wie in Fig. 1 dargestellt, als Absperrorgan dienen und eine durchgehende Durchgangsbohrung 4 aufweisen. Der Kugelhahn kann auch als Drosselorgan verwendet werden, indem das Kugelküken 5 mit einer Drosselöffnung 19 von beliebiger Steuercharakteristik versehen wird. Um mit möglichst wenigen Konstruktionsteilen für jeden Anwendungszweck auskommen zu können, wird das Kugelküken 5 auf die folgende Weise hergestellt. Gemäß Fig. 2 erhält zunächst das Kugelküken 5 bei der Formung einen Boden 20, der einseitig die Durchgangsbohrung 4 von einheitlichem Durchmesser verschließt. Der Boden 20 wird in einem zweiten Verfahrensschritt durchtrennt, und zwar vollständig, wenn das Kugelküken eine Absperrfunktion ausüben soll (Fig.1). Wie in den Fig. 4 und 5 gezeigt ist, wird bei der Verwendung als Drosselorgan aus dem Boden 20 nachträglich die Drosselöffnung 19 herausgearbeitet.

Die gleiche nachträgliche Anpassung des Kugelkükens 4 an den vorgesehenen Anwendungsfall wird auch dann vorgenommen, wenn das Kugelküken 4 z.B. aus Sphäroguß gegossen ist. Bei Verwendung eines metallischen Gußwerkstoffes für das Kugelküken 4 entfallen die in Fig.1 dargestellten keramischen Teile des Kugelhahnes. Statt dessen sind metallische Dichtringe oder solche aus Kunststoff in das Gehäuse eingelegt, gegenüber denen das Kugelküken abdichtet.

**Patentansprüche**

Verfahren zum Fertigen eines insbesondere aus Keramik bestehenden Kugelkükens (5) für einen Kugelhahn, das eine Durchgangsbohrung (4) und gegebenenfalls eine Drosselbohrung (19) aufweist, dadurch gekennzeichnet, daß das Kugelküken (5) als Bauteil mit der durch einen Boden (20) zunächst einseitig verschlossenen Durchgangsbohrung (4) geformt wird und daß nachträglich der Boden (20) wahlweise vollständig, wenn das Kugelküken (5) eine Absperrfunktion ausüben soll, oder zur Bildung der Drosselöffnung (19) teilweise, wenn das Kugelküken (5) als Drosselorgan verwendet wird, durchgetrennt wird.

**Claims**

Method for the production of a spherical plug (5), which consists in particular of ceramic, for a spherical cock and displaying a passage bore (4) and, in a given case, a throttle bore (19), characterised thereby, that the spherical plug (5) is shaped as component with the passage bore (4) initially closed-off at one side by a base (20) and that the base (20) is subsequently severed through selectably either completely when the spherical plug (5) is to exercise a shut-off function or partially for formation of the throttle opening (19) when the spherical plug (5) is used as throttle organ.

**Revendications**

Procédé de fabrication d'un boisseau sphérique (5) se composant en particulier de céramique, pour un robinet à boisseau sphérique qui présente un alésage de passage (4) et, le cas échéant, un alésage d'étranglement (19), caractérisé en ce que le boisseau sphérique (5) est formé comme élément de construction avec un alésage de passage (4) tout d'abord obturé d'un côté, et que le fond est ultérieurement perforé, au choix, complètement lorsque le boisseau sphérique (5) doit exercer une fonction d'isolation, ou partiellement lorsque le boisseau sphérique (5) doit être utilisé comme organe d'étranglement.

Fig. 1

EP 0 309 678 B1

Fig. 2

Fig. 3

Fig. 4

Fig. 5